# EUROPEAN PATENT APPLICATION

(11) **EP 2 578 821 A1**
(43) Date of publication of application: **10.04.2013**
(21) Application number: 10852524.7
(22) Date of filing: 04.06.2010
(51) Int. Cl.: F01M 11/03

(54) **OIL FILTER AND FILTER ELEMENT**

(71) Applicant: Tokyo Roki Co., Ltd., Yokohama-shi Kanagawa 224-0041 (JP)
(72) Inventor: OKAI, Yasuhiro, Yokohama-shi Kanagawa 224-0041 (JP)
(74) Representative: Horner, Martin Grenville
(86) International application number: PCT/JP2010/059531
(87) International publication number: WO 2011/151920

(57) **Abstract**

[Problem to be Solved]

To reliably make oil flow into a drain passage at the time of replacing a filter element or the like.

[Solution]

An oil filter 1 includes a housing 5 and a cap member 6 that form a space for containing a filter element 7. An engaging portion 23 is provided to the cap member to engage the filter element. Also, a communication portion 11 connected to the inner circumferential space of the filter element, a drain channel portion 12 provided annularly to encircle the communication portion, and an inflow side channel portion 13 provided annularly to encircle the drain channel are provided at the bottom portion of the housing. A gasket 35 abutting a partition wall 14 and suppressing a flow of yet to be filtered oil into the drain channel is provided at the bottom portion of the filter element. Furthermore, when removing the cap member from the housing, the filter element is moved together with the cap member by the engaging portion, and the yet to be filtered oil is made to flow into the drain channel through a gap between the gasket and the partition wall.

## Description

### [Technical Field]

The present invention relates to an oil filter, and a filter element used in the oil filter.

### [Background Art]

Oil filters for removing contamination (metal powder or the like) from lubricating oil or the like used in engines are known. Such an oil filter forms a hermetically sealed space with a housing and a cap member, and contains a cylindrical filter element in the hermetically sealed space. Yet to be filtered oil is provided from the outer circumferential side of the filter element, and oil which has reached an inner circumferential space of the filter element (filtered oil) is delivered to the engine side.

Since filter performance of the filter element is degraded due to use, the filter element is replaced as appropriate. A drain mechanism for extracting oil is provided so that oil in the hermetically sealed space will not leak to the outside at the time of replacement of the filter element.

According to a device described in PTL 1, in a state where a filter cap is attached, a pressing portion exerts downward pressure on a filter element (an oil element) and blocks the drain passage by a blocking plate arranged below the filter element. Then, at the time of oil replacement, when the filter cap is removed, the blocking plate and the filter element move upward by a spring to open the drain passage.

### [Citation List]

### [Patent Literature]

[Patent Literature 1] Japanese Patent Application Laid-Open Publication No. 2007-291939

### [Summary of Invention]

### [Technical Problem]

The device of PTL 1 is configured to move the blocking plate upward by a spring. Accordingly, there is a problem that if the blocking plate sticks to the casing and is prevented from moving upward, oil cannot flow into the drain passage.

The present invention is made in view of the above, and its object is to reliably cause the oil to flow into the drain passage at the time of replacement of the filter element or the like.

### [Solution to Problem]

To achieve the object described above, the present invention is an oil filter including a cylindrical filter element, a housing in which at least a bottom portion of the filter element is contained, and a cap member attached to the housing in a liquid-tight manner and forming with the housing a space for containing the filter element, for providing yet to be filtered oil from an outer circumferential side of the filter element to deliver to an outside filtered oil that has reached an inner circumferential space of the filter element, where an engaging portion is provided to engage the filter element with the cap member, the housing includes a tubular communication portion connected to the inner circumferential space of the filter element from a bottom side thereof, a drain channel provided annularly to encircle the tubular communication portion, and an inflow channel partitioned from the drain channel by a partition wall and annularly provided to encircle the drain channel, the filter element includes at the bottom portion thereof a gasket abutting the partition wall while the cap member is attached to the housing in a liquid-tight manner and suppressing a flow of the yet to be filtered oil into the drain channel, and when the cap member is removed from the housing, the filter element and the cap member are moved together due to the engaging portion so that the yet to be filtered oil flows into the drain channel through a gap between the gasket and the partition wall created by the move.

According to the oil filter of the present invention, when releasing the liquid-tight state between the housing and the cap member to remove the cap member from the housing, the filter element moves together with the cap member via the engaging portion. During this process, the gasket provided at the bottom portion of the filter element is separated from the partition wall. When the gasket is separated, a gap is created between the gasket and the partition wall, and yet to be filtered oil flows into the drain channel from this gap and into the drain passage. As described, a gap is formed between the gasket and the partition wall by the movement of the filter element accompanying the removal of the cap member, and thus, a gap can be reliably formed to allow oil to reliably flow into the drain passage.

In the oil filter described above, preferably, the cap member includes a pressing portion that presses the filter element toward the partition wall, in a state attached to the housing. According to this oil filter, the intimacy of contact between the gasket and the partition wall in a state where the cap member is attached to the housing is increased, and thus, the flow of the yet to be filtered oil can be reliably suppressed from flowing into the drain channel at the time of use of the filter element.

In the oil filter described above, preferably, the communication portion is provided to have a length such that a tip thereof protrudes from an end face of the partition wall, and is connected to the inner circumferential space of the filter element in a liquid-tight manner when a gap is created between the gasket and the partition wall. According to this oil filter, a defect that yet to be filtered oil which has flowed into the drain channel can be suppressed from flowing into the inner circumferential space.

In the oil filter described above, preferably, the gasket is an elastomeric layer being provided to the bottom portion of the filter element and including an opening whose outer circumferential edge is bent along an inner circumferential face of a cylindrical core partitioning the inner circumferential space, and seals by intimately contacting an outer circumferential surface of the tubular communication portion when a gap is created between the partition wall. According to this oil filter, a defect that yet to be filtered oil which has flowed into the drain channel can be reliably suppressed from flowing into the inner circumferential space.

In the oil filter described above, preferably, the filter element includes an upper end plate at an upper end thereof, and the engaging portion has an engaging claw to engage with a side edge of the upper end plate and is provided to the cap member. According to this oil filter, the filter element contained in the containing space can be moved with the cap member by a simple structure.

In the oil filter described above, preferably, a communication portion is provided to a ceiling of the cap member to communicate an inside of the cap member with an outside thereof, and a stopper member, that hermetically seals the communication portion while the cap member is attached to the housing in a liquid-tight manner and communicates the communication portion when the cap member is removed from the housing, is provided to the upper end of the filter element. According to this oil filter, at the time of removing the cap member, air flows into the containing space through the communication portion provided to the ceiling of the cap member. Accordingly, a defect that oil in the containing space leaks out from the connection part between the cap member and the housing can be suppressed.

In the oil filter described above, preferably, the stopper member includes a columnar portion that fits into the communication portion and has a flange formed thereto, and the stopper member is provided to the upper end portion of the filter element in a state in which a retaining plate provided with a penetration hole with a diameter larger than that of the columnar portion and smaller than that of the flange covers the flange and the columnar portion protrudes from the penetration hole. According to this oil filter, the communication portion can be sealed or brought into a communicating state by a simple structure.

Furthermore, the present invention is a cylindrical oil filter element for filtering yet to be filtered oil provided from an outer circumferential side and discharging from an inner circumferential space thereafter, the filter element being used for an oil filter including a housing and a cap member attached to the housing in a liquid-tight manner and contained in a space formed by the housing and the cap member, the filter element including an upper end portion being engaged with the cap member by an engaging portion and a bottom portion at which a gasket is formed, the gasket abutting a partition wall partitioning an annular drain channel provided to the housing and an annular inflow channel encircling the drain channel and suppressing yet to be filtered oil flowing into the drain channel through the inflow channel while the cap member is attached to the housing in a liquid-tight manner, where, when the cap member is removed from the housing, the filter element is moved together with the cap member due to the engaging portion, and the yet to be filtered oil is made to flow into the drain channel through a gap between the gasket and the partition wall created by the move.

When releasing the liquid-tight state between the housing and the cap member to remove the cap member from the housing, the filter element of the present invention moves together with the cap member via the engaging portion. During this process, the gasket provided at the bottom portion of the filter element is separated from the partition wall. When the gasket is separated, a gap is created between the gasket and the partition wall, and yet to be filtered oil flows into the drain channel from this gap and into the drain passage. As described, a gap is formed between the gasket and the partition wall by the movement of the filter element accompanied with the removal of the cap member, and thus, a gap can be reliably formed to allow oil to be reliably flow into the drain passage.

In the filter element described above, preferably, a stopper member is provided to the upper end, hermetically seals a communication portion provided to a ceiling of the cap member to communicate an inside of the cap member with an outside thereof while the cap member is attached to the housing in a liquid-tight manner, and communicates the communication portion when the cap member is removed from the housing. According to this filter element, the communication portion can be sealed or brought into a communicating state by a simple structure.

### [Advantageous Effect of Invention]

According to the present invention, oil can be reliably made to flow into a drain passage at the time of replacement of a filter element or the like.

### [Brief Description of Drawings]

[Figure 1] Figure 1 is a view for describing an oil filter and its peripheral portions.
[Figure 2] Figure 2 is a view for describing a bottom portion of a housing.
[Figure 3] Figure 3 is a view for describing an internal structure of a cap member.
[Figure 4] Figure 4 includes a cross-sectional view, a planar view and a bottom view of a filter element.
[Figure 5] Figure 5 is a view for describing a state where a partition wall and a gasket abut against each other in a liquid-tight manner.
[Figure 6] Figure 6 is a view for describing an O-ring arranged between the housing and the cap member.
[Figure 7] Figure 7 is a view for describing a state where the gasket is separated from the partition wall.
[Figure 8] Figure 8 is an arrow view along I-I shown in Figure 1, and is a view for describing a state where the gasket is separated from the partition wall.
[Figure 9] Figure 9 is a cross-sectional view for describing main portions of a second embodiment.
[Figure 10] Figure 10 is a cross-sectional view for describing an overall structure of a third embodiment.
[Figure 11] Figure 11 is a cross-sectional view for describing a filter element.
[Figure 12] Figure 12 is a cross-sectional view for describing an upper end portion of the filter element and the inside of a cap member.
[Figure 13] Figure 13 is an enlarged cross-sectional view for describing a state where sealing by a stopper member is released, and a communication portion is brought into communication.
[Figure 14] Figure 14 is an enlarged cross-sectional view for describing a connected part between the cap member and a housing in the communicating state shown in Figure 13.
[Figure 15] Figure 15 is an enlarged cross-sectional view for describing the periphery of a gasket in the communicating state shown in Figure 13.
[Figure 16] Figure 16 is a cross-sectional view for describing an overall structure of a fourth embodiment.
[Figure 17] Figure 17 is a cross-sectional view for describing an upper end portion of a filter element and the inside of a cap member.
[Figure 18] Figure 18 is an enlarged cross-sectional view for describing a state where the sealing by a stopper member is released, and the communication portion is brought into communication.

### [Description of Embodiments]

An embodiment of the present invention will be described below with reference to the drawings.

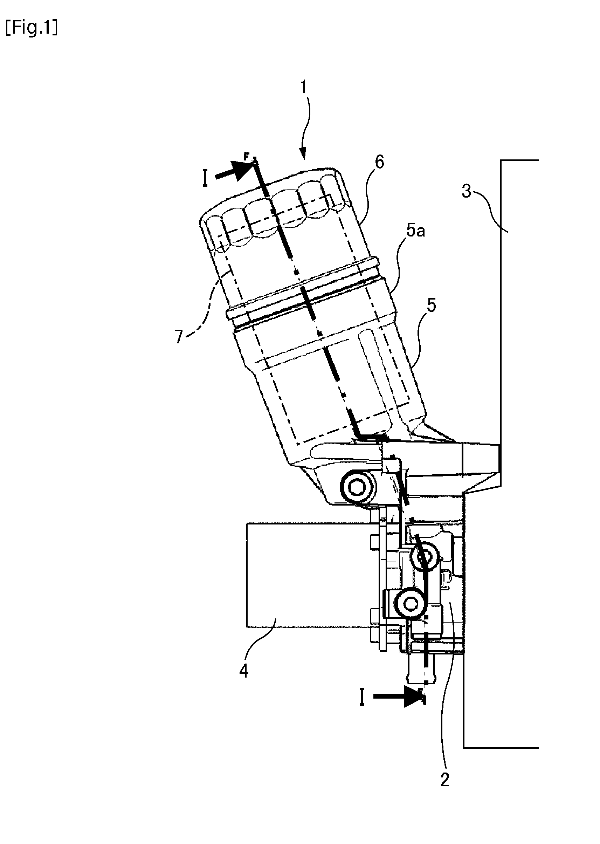

As shown in Figure 1, an oil filter 1 of the present embodiment is attached to an engine block 3 via a die-cast aluminum casing 2. An oil cooler 4 is also attached to the casing 2. Yet to be filtered oil is supplied to the oil filter 1 from the oil pan side. Then, oil filtered by the oil filter 1 is delivered to the engine block 3.

The oil filter 1 includes a housing 5, a cap member 6 and a filter element 7.

The housing 5 is a bottomed cylindrical member having its top face opened, and is provided integrally with the casing 2 at the upper end face of the casing 2. Accordingly, the housing 5 is also made of die-cast aluminum as with the casing 2. The housing 5 of the present embodiment is provided in a tilted state with respect to the lateral face of the engine block 3. Specifically, the upper end portion is tilted by about 20 degrees so as to be separated from the engine block 3, with the lower end portion as the center.

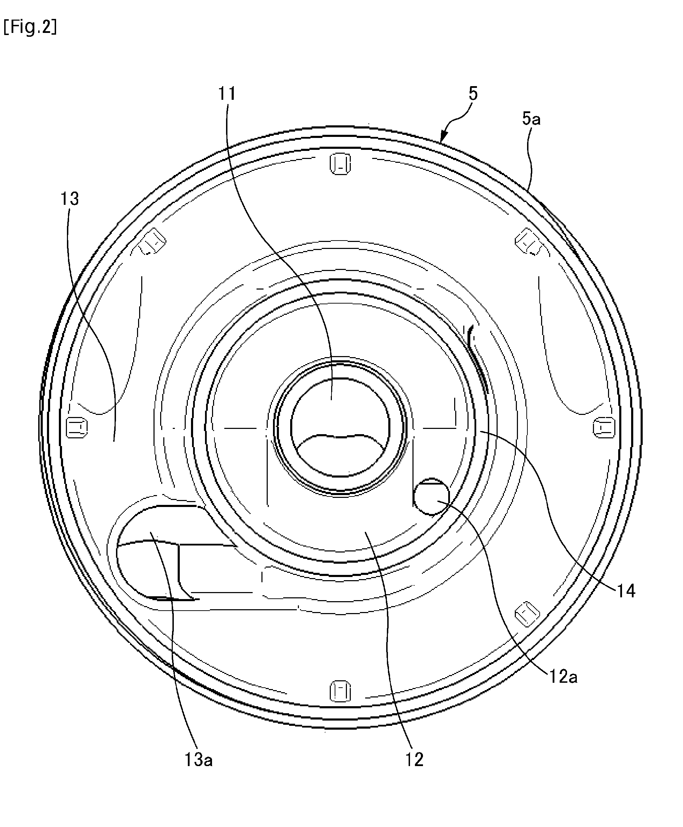

As shown in Figure 2, a communication portion 11, a drain channel portion 12 and an inflow side channel portion 13 are provided to the bottom portion of the housing 5. In the present embodiment, the communication portion 11 is provided to the center of the circular bottom portion, and the drain channel portion 12 is annularly provided to encircle the communication portion 11. Also, the inflow side channel portion 13 is annularly provided to encircle the drain channel portion 12. Additionally, an annular partition wall 14 is provided at the boundary between the drain channel portion 12 and the inflow side channel portion 13 to thereby partition the drain channel portion 12 and the inflow side channel portion 13.

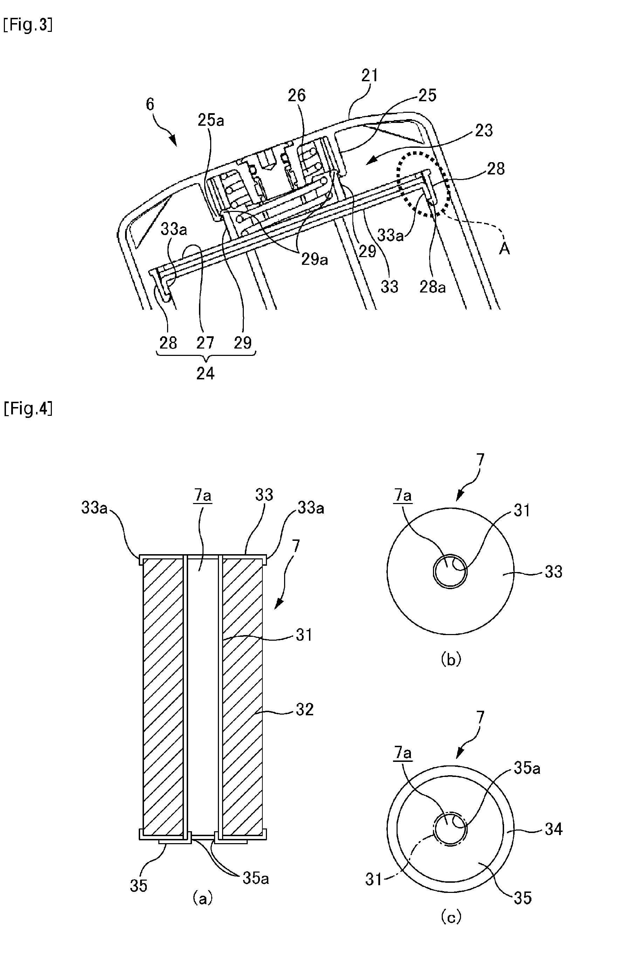

The communication portion 11 is tubularly formed, and is connected from the bottom side to an inner circumferential side space 7a (see Figure 4(a)) formed on the inner circumferential side of the filter element 7. The communication portion 11 is linked with the engine block 3, and oil filtered by the filter element 7 is delivered to the engine block 3 through the communication portion 11.

The inflow side channel portion 13 is a channel through which yet to be filtered oil flows, and the oil flows into the inflow side channel portion 13 from an inlet 13a provided to the bottom face. The oil which has flowed in flows along the inflow side channel portion 13 in a circular pattern. Then, the oil which has flowed through the inflow side channel portion 13 penetrates into the inside from the outer circumferential side of the filter element 7, as will be described later.

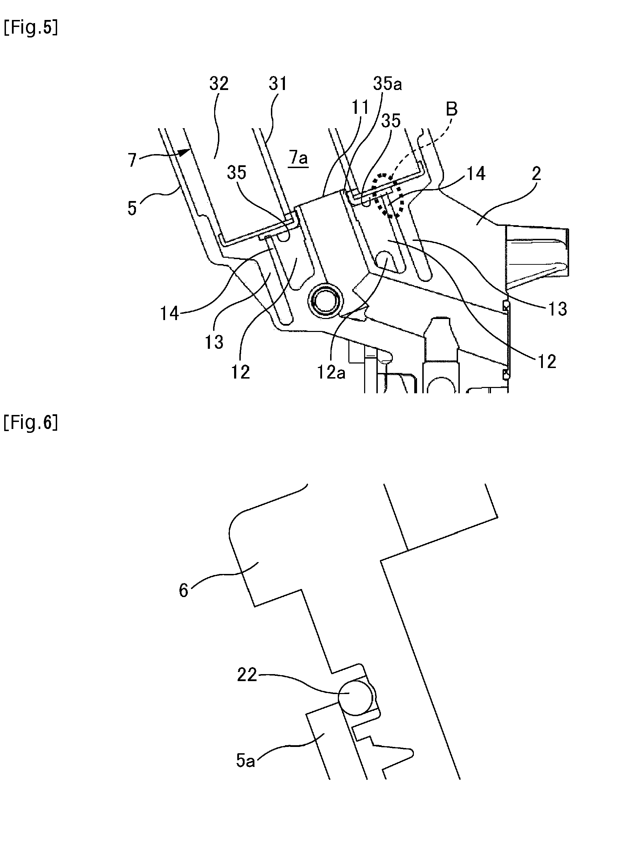

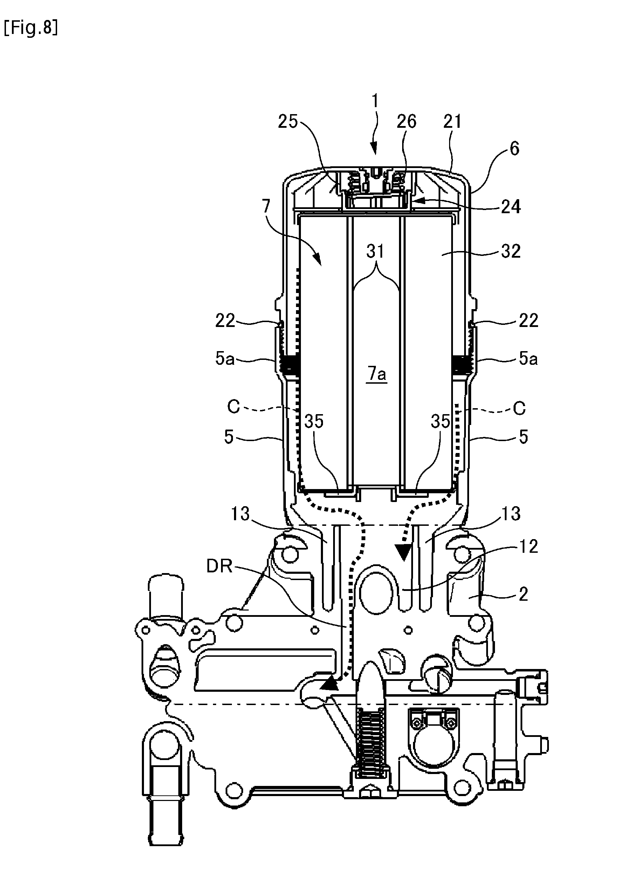

The drain channel portion 12 is a part into where the yet to be filtered oil existing on the outer circumferential side of the filter element 7 flows at the time of replacement of the filter element 7, and an outlet 12a leading to a drain passage DR (see Figure 8) that is linked to an oil pan is provided to the bottom portion thereof. As described above, the drain channel portion 12 and the inflow side channel portion 13 are partitioned by the partition wall 14. In the present embodiment, as shown in Figure 5, the upper end face of the partition wall 14 is provided at a position one step lower than the upper end face of the communication portion 11. In other words, the length of the communication portion 11 is determined such that its tip protrudes from the upper end face of the partition wall 14. The reason will be given later.

Furthermore, as shown in Figure 1, an upper portion 5a of the housing 5 is formed to slightly bulge out on the outer circumferential side compared to other portions. A female screw is provided on the inner circumferential face of the upper portion 5a for attachment to a male screw provided on the lower outer circumferential surface of the cap member 6. Thus, the upper portion 5a of the housing 5 functions as an attachment portion for attaching the cap member 6.

Next, the cap member 6 will be described.

As shown in Figures 1 and 3, the cap member 6 is a cylindrical member having an opening at the lower end and its upper end covered by a ceiling 21. As described above, a male screw is provided to the lower outer circumferential surface of the cap member 6. Also, an O-ring 22 (an annular seal member) is attached to the lower portion of the cap member 6, as shown in Figure 6. Accordingly, by screwing the lower portion of the cap member 6 into the upper portion 5a of the housing 5, the gap between the housing 5 and the cap member 6 is filled by the O-ring 22, and a liquid-tight space is formed inside the cap member 6 and the housing 5. This liquid-tight space is used as a space for containing the filter element 7.

As shown in Figure 3, an engaging portion 23 is provided on the inner lateral face of the ceiling 21. This engaging portion 23 is a part for engaging with the filter element 7, and includes a movable member 24, a cap-side attachment portion 25 and a coil spring 26.

The movable member 24 is a part that engages with the filter element 7 and moves with the filter element 7, and includes a substrate 27, an engaging claw 28 and a movable side claw 29.

The substrate 27 is a plate member on which the engaging claw 28 and the movable side claw 29 are provided, and in the present embodiment, it is formed by a circular plate which is approximately the same size as an upper end plate 33 (see Figure 4(b)) provided at the upper end portion of the filter element 7.

The engaging claw 28 is a part that engages with the upper end plate 33 of the filter element 7, and a plurality of engaging claws 28 are vertically arranged at a regular interval, toward the filter element 7 side from the outer circumferential edge of the substrate 27. A hook portion 28a is arranged in a protruding manner from the tip of each engaging claw 28 toward the center side (the inner side in the diametrical direction) of the substrate 27. As shown by the encircled portion attached with reference sign A, the filter element 7 is engaged by hooking the hook portion 28a to the upper end plate 33.

The movable side claw 29 is a part that engages with the cap-side attachment portion 25, and is vertically arranged on the substrate 27 extending toward the direction opposite that of the engaging claw 28. A plurality of the movable side claws 29 are provided so as to be arranged in a substantially circular fashion near the center of the substrate 27. A hook portion 29a is arranged in a protruding manner from the tip of each movable side claw 29 toward the outer side in the diametrical direction of the substrate 27. The movable range of the movable member 24 is restricted by hooking the hook portion 29a to the hook portion 25a of the cap-side attachment portion 25.

The cap-side attachment portion 25 is a part for attaching the movable member 24 in a state allowing movement in the approaching direction or the separating direction. The cap-side attachment portion 25 of the present embodiment is formed by vertically arranging, in a substantially circular fashion, a plurality of plate members having the hook portions 25a on the inner side. By arranging the movable side claws 29 along the inner wall of the cap-side attachment portion 25, the movable member 24 is enabled to move within a range until the hook portion 29a of the movable side claw 29 abuts against the hook portion 25a of the cap-side attachment portion 25. That is, movement in the direction of approaching or separating from the ceiling 21 of the cap member 6 is enabled.

The coil spring 26 is a member that is arranged inside the cap-side attachment portion 25 and the movable side claw 29, and presses the movable member 24 in the separating direction by being exerted a reaction force from the ceiling 21 of the cap member 6. When the cap member 6 is sufficiently screwed into the housing 5, the coil spring 26 contracts and presses the movable member 24 in the direction of the housing 5. Then, the filter element 7 engaged with the movable member 24 is also pressed in the direction of the housing 5. Thus, the pair of the movable member 24 and the coil spring 26 corresponds to a pressing portion that presses the filter element 7.

Next, the filter element 7 will be described.

As shown in Figure 4(a), the filter element 7 has a cylindrical external appearance. Also, a cylindrical core material 31 is arranged at the center in the diametrical direction. A plurality of through holes (not shown) for letting oil pass therethrough are formed in the core material 31. The inner circumferential side space 7a is partitioned inside the core material 31, and oil filtered by the filter element 7 flows into the inner circumferential side space 7a. A filtering member 32 is arranged on the outer circumference of the core material 31. As the filtering member 32, synthetic fibers molded into a cylindrical form are used. Additionally, in addition to a molded synthetic fiber product, a filter paper folded into an accordion shape may also be used as the filtering member 32.

The upper end face of the filter element 7 is covered by the upper end plate 33. As shown in Figure 4(b), the upper end plate 33 is a circular plate with a diameter slightly larger than that of the filtering member 32. Also, as shown in Figure 3, an outer circumferential portion 33a of the upper end plate 33 is bent into an L shape along the surface of the filtering member 32. The engaging claw 28 described above engages with the filter element 7 by the hook portion 28a engaging with the outer circumferential portion 33a of the upper end plate 33.

The lower end face of the filter element 7 is covered with a lower end plate 34. As shown in Figure 4(c), the lower end plate 34 is a circular plate with a diameter slightly larger than that of the filtering member 32, and its outer circumferential portion is bent in the same manner as the upper end plate 33. A doughnut-shaped gasket 35 which is a size smaller than the lower end plate 34 is joined to the surface of the lower end plate 34 (the bottom portion of the filter element 7). The gasket 35 is formed of an elastomeric layer, and is made by molding. An opening 35a is provided at the center of the gasket 35. The outer circumferential edge of the opening 35a is formed by being bent into an L shape along the inner circumferential face of the core material 31 partitioning the inner circumferential side space 7a.

When the filter element 7 is contained in the containing space, the gasket 35 intimately contacts the upper end face of the partition wall 14 in a liquid-tight manner by the pressure from the pressing portion (the movable member 24, the coil spring 26), as shown in Figure 5 the encircled portion attached with reference sign B. Also, the gasket 35 is interposed between the outer circumferential surface of the tip portion of the communication portion 11 and the inner circumferential face of the core material 31, and the inner circumferential side space 7a and the inner space of the communication portion 11 are linked in a liquid-tight manner.

Next, a function of the oil filter 1 having the structure described above will be described.

At the time of using the oil filter 1, the filter element 7 is contained in a containing space formed by the cap member 6 and the housing 5. In this case, first, the filter element 7 is engaged with the engaging portion 23 provided to the cap member 6. That is, the engaging claw 28 is engaged with the upper end plate 33 of the filter element 7 by fitting the upper portion of the filter element 7 into the movable member 24.

When the filter element 7 is engaged, a lower half portion of the filter element 7 is inserted into the inside of the housing 5, and the cap member 6 is screwed into the housing 5. At this time, the position of the filter element 7 is determined such that the upper end of the communication portion 11 is inserted into the opening of the gasket 35. When the cap member 6 is sufficiently screwed, the O-ring 22 seals the housing 5 and the cap member 6 in a liquid-tight manner.

In this sealed state, the movable side claw 29 enters into the cap-side attachment portion 25. Then, the movable member 24 moves toward the side of the ceiling 21 until the hook portion 29a is positioned near the ceiling 21. The coil spring 26 contracts according to the movement of the movable member 24, and a reaction force is created. The filter element 7 is thereby pressed toward the partition wall 14 of the housing 5, as shown in Figure 5. As a result, the gasket 35 and the upper end face of the partition wall 14 are sealed together in a liquid-tight manner. Also, the tip portion of the communication portion 11 enters the opening of the gasket 35, and the gasket 35 intimately contacts the inner wall surface of the core material 31 and the outer circumferential surface of the communication portion 11, and a sealed state is created also at these parts.

The filter element 7 is thereby contained in the containing space and becomes usable. In this use state, yet to be filtered oil flowed into the inflow side channel portion 13 from the inlet 13a flows along the inflow side channel portion 13 in a circular pattern and fills the inflow side channel portion 13, and flows into the gap between the outer circumferential surface of the filter element 7 and the inner circumferential faces of the housing 5 and the cap member 6. Then, the oil flows to within the filtering member 32, and solid contamination such as metal powder is removed by filtration by the filtering member 32. The oil which has passed through the inside of the filtering member 32 passes through a through hole provided to the core material 31 and flows into the inner circumferential side space 7a. The filtered oil which has flowed into the inner circumferential side space 7a flows down the inner circumferential side space 7a into the communication portion 11, and is supplied to the engine block 3. At this time, since the gasket 35 is interposed between the core material 31 and the communication portion 11, the filtered oil flowing down the inner circumferential side space 7a can be prevented from leaking to the drain channel portion 12, and can be lead to the communication portion 11.

Next, removal of the filter element 7 will be described. In this case, the cap member 6 is rotated in the opposite direction (the removal direction) from the time of attachment. The cap member 6 is thereby moved in the direction of separating from the housing 5 by the male screw of the cap member 6 and the female screw of the housing 5. As shown in Figure 3, when the hook portion 29a of the movable side claw 29 abuts the hook portion 25a of the cap-side attachment portion 25, the filter element 7 will then move together with the cap member 6 in the direction of separating from the housing 5. The gasket 35 thereby separates from the upper face of the partition wall 14, and a gap is formed. Also, as shown in Figure 6, the sealed state by the O-ring 22 is released by the movement of the cap member 6. A gap is thus formed also between the cap member 6 and the housing 5, and air flows to the side of the containing space through the gap.

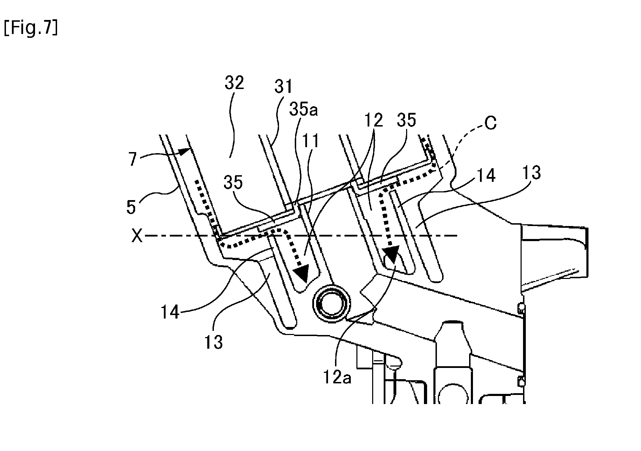

As a result, as shown in Figures 7 and 8 by a dashed arrow C, yet to be filtered oil flows into the drain channel portion 12 through the gap between the gasket 35 and the partition wall 14 and passes through the drain passage DR to be collected in the oil pan. As shown in Figure 7, in this state, the outer circumferential surface of the tip portion of the communication portion 11 and the inner circumferential face of the lower end of the core material 31 are maintained in a sealed state via the gasket 35. Thus, the defect of the yet to be filtered oil flowing into the communication portion 11 can be suppressed. That is, the defect of the yet to be filtered oil being supplied to the engine block 3 can be prevented. Then, when the liquid level of the yet to be filtered oil reaches the same height as the upper end face of the partition wall 14 (in the present embodiment, the height shown in Figure 7 by a reference sign X), flowing of oil into the drain channel portion 12 ends.

Here, the points of the oil filter 1 of the first embodiment will be summarized.

This oil filter 1 includes the cylindrical filter element 7, the housing 5 that contains the lower half of the filter element 7, and the cap member 6 that is attached to the housing 5 in a liquid-tight manner and that forms a space with the housing 5 for containing the filter element 7.

Furthermore, the engaging portion 23 for engaging the filter element 7 in a detachable manner is provided inside the cap member 6. Also, the housing 5 has, provided to its bottom portion, the tubular communication portion 11 that is connected to the inner circumferential side space 7a of the filter element 7 from the bottom side, the drain channel portion 12 that is annularly provided to encircle the communication portion 11, and the inflow side channel portion 13 that is partitioned by the partition wall 14 from the drain channel portion 12 and that is annularly provided to encircle the drain channel portion 12.

On the other hand, at the bottom portion of the filter element 7, the cap member 6 abuts the partition wall 14 while being attached to the housing 5 in a liquid-tight manner, and the gasket 35 for suppressing the flow of yet to be filtered oil into the drain channel portion 12 is provided.

With this oil filter 1, at the time of removing the cap member 6 from the housing 5, the filter element 7 is moved together with the cap member 6, by the engaging portion 23, in the direction of separating from the housing 5, and yet to be filtered oil is made to flow into the drain channel portion 12 through the gap between the gasket 35 and the partition wall 14 created by the move. That is, by moving the filter element 7 via the cap member 6, a gap is formed between the gasket 35 and the partition wall 14. Accordingly, a gap can be reliably formed, and oil can be reliably made to flow into the drain channel portion 12.

Also, the pressing portion (a set of the movable member 24 and the coil spring 26) is provided to the cap member 6, the pressing portion pressing the filter element 7 toward the partition wall 14 with the cap member 6 being attached to the housing 5. The intimacy of contact between the gasket 35 and the partition wall 14 is increased by this pressing portion, and the defect of yet to be filtered oil flowing into the drain channel portion 12 at the time of use of the filter element 7 can be reliably suppressed.

Furthermore, the length of the communication portion 11 is determined such that the tip of the communication portion 11 protrudes from the upper end face of the partition wall 14, and when a gap is created between the gasket 35 and the partition wall 14, the periphery of the opening of the gasket 35 is interposed between the core material 31 of the filter element 7 and the communication portion 11. Accordingly, the defect of the yet to be filtered oil which has flowed into the drain channel portion 12 flowing into the inner circumferential side space 7a can be suppressed.

Furthermore, the engaging portion 23 of the cap member 6 includes a plurality of engaging claws 28, and is engaged by hooking the engaging claws 28 to the outer circumferential portion 33a (the side edge) of the upper end plate 33 provided to the filter element 7. Accordingly, the filter element 7 contained in the containing space can be moved together with the cap member 6 by a simple structure.

Next, a second embodiment of the present invention will be described.

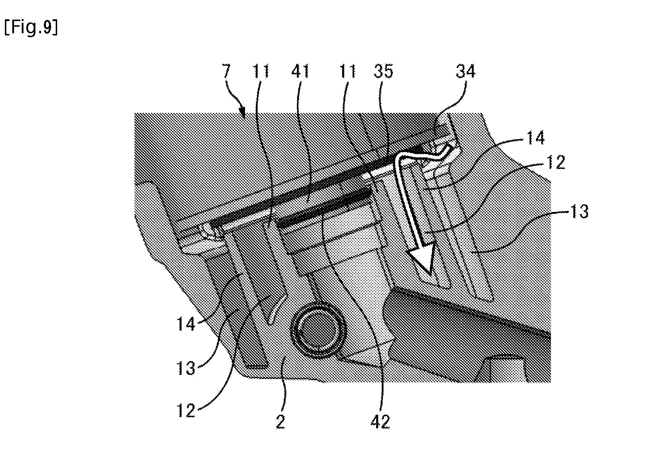

Figure 9 is a view for describing main portions of the second embodiment. Other portions of the second embodiment are structured in the same manner as in the first embodiment. Accordingly, the description of other portions will be omitted.

In the second embodiment, a hollow connection portion 41 is provided to the bottom face of a filter element 7 in a protruding manner, and an inner circumferential side space 7a is extended to the extent of the hollow connection portion 41. The hollow connection portion 41 is a part that is inserted into a communication portion 11 and connected to the communication portion 11 in a liquid-tight manner. Thus, the outer diameter of the hollow connection portion 41 is determined to be smaller than the inner diameter of the communication portion 11. Also, an O-ring 42 for sealing is attached to the outer circumference of the hollow connection portion 41. For its part, since the hollow connection portion 41 is provided, the communication portion 11 is determined to be shorter than the communication portion 11 of the first embodiment. Additionally, a gasket 35 is provided at a portion on the outer circumferential side than the hollow connection portion 41.

Also in this second embodiment, when a cap member 6 attached to a housing 5 is rotated in the removal direction, the filter element 7 engaged with the cap member 6 is moved in the direction of separating from the housing 5. A gap is accordingly created between the gasket 35 and a partition wall 14, and yet to be filtered oil flows into a drain channel portion 12 as shown by the arrow. At this time, since the lower end portion of the hollow connection portion 41 is inserted in the communication portion 11 and the hollow connection portion 41 and the communication portion 11 are sealed by the O-ring 42, the defect that the yet to be filtered oil is delivered to the engine block 3 side through the communication portion 11 can be suppressed.

Accordingly, also in the second embodiment, the filter element 7 is moved according to the removal of the cap member 6 and a gap is created between the gasket 35 and the partition wall 14, and thus, yet to be filtered oil can be made to flow into a drain passage DR through the drain channel portion 12 at the time of replacement of the filter element 7 or the like.

Next, a third embodiment of the present invention will be described.

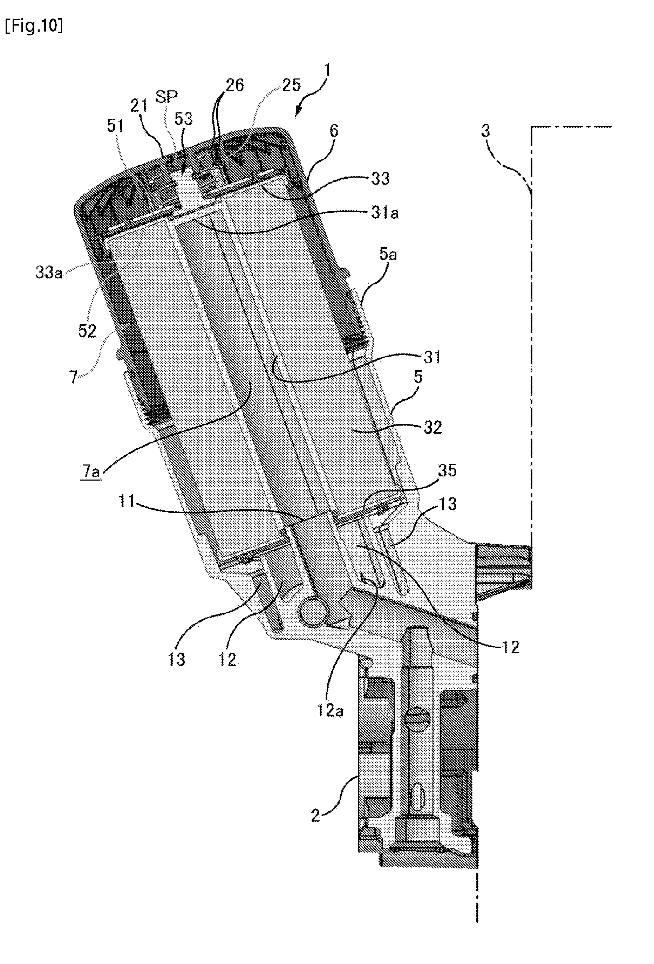

Figure 10 is a cross-sectional view for describing a structure of the third embodiment. In the third embodiment, a cylindrical communication portion SP that communicates the inside of a cap member 6 with the outside thereof (that is, the inner space and the outer space) is provided at the center of a ceiling 21 of the cap member 6. Also, a filter element 7 of this embodiment includes a stopper member 53 that can be fitted into the communication portion SP. When the cap member 6 is attached to a housing 5 in a liquid-tight manner, the stopper member 53 is fitted into the communication portion SP and hermetically seals the communication portion SP. Then, the stopper member 53 creates a gap between the communication portion SP and itself according to the removal of the cap member 6 from the housing 5. The communication portion SP is thereby made to communicate according to the removal of the cap member 6 and air flows into the containing space to cause the oil in the containing space to flow into a drain channel portion 12.

Hereinafter, the third embodiment will be described in detail. In this explanation, parts same as those of the embodiments described above will be denoted with the same reference signs, and description thereof will be omitted.

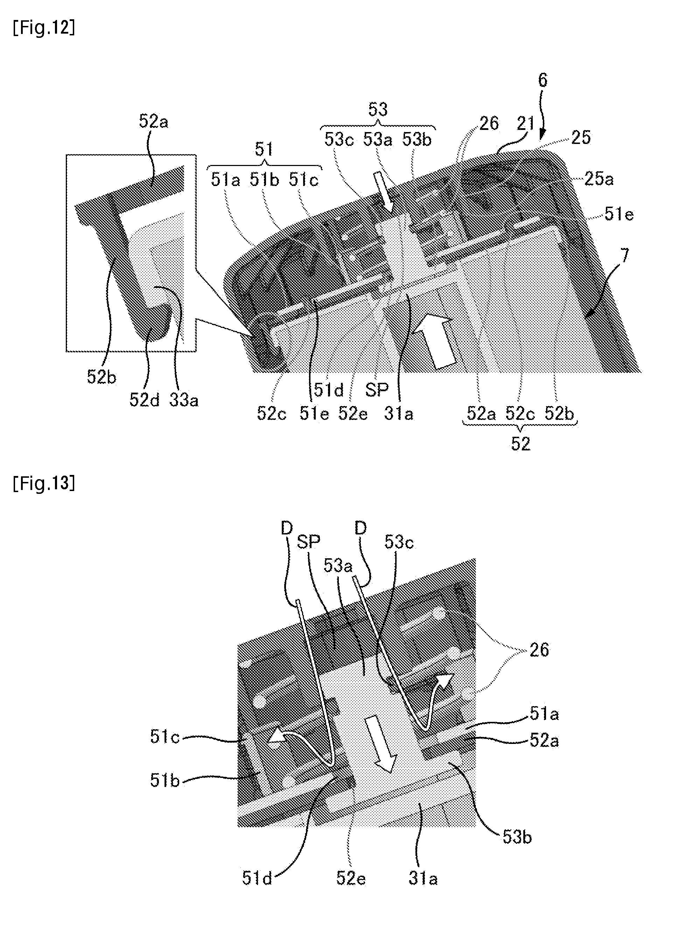

In an oil filter 1 shown in Figures 10 and 12, the cap member 6 includes a movable member 51, in addition to the parts described in the embodiment described above. The movable member 51 is a member to be attached to a cap-side attachment portion 25, and is attached so as to be movable in the approaching direction or the separating direction, as with the movable member 24 of the first embodiment.

The movable member 51 includes a substrate 51a and a movable side claw 51b. The substrate 51a is a member that is engaged with the filter element 7, and that presses the filter element 7 toward the housing 5 by a reaction force from a coil spring 26. The substrate 51a of the present embodiment is structured from a circular plate which is slightly smaller than an upper end plate 33. An insertion opening 51d into which a columnar portion 53a of the stopper member 53 is to be inserted is provided at a center portion of the substrate 51a. Also, a plurality of movable side claws 51b are arranged in a substantially circular fashion so as to surround the insertion opening 51d.

The movable side claw 51b is a part for engaging with the cap-side attachment portion 25, and is vertically arranged on the upper face of the substrate 51a. A hook portion 51c is arranged at the tip of each movable side claw 51b in a protruding manner toward the outer side in the diametrical direction of the substrate 51a. The movable range of the movable member 51 is restricted by hooking the hook portion 51c to a hook portion 25a of the cap-side attachment portion 25. Furthermore, an engaging hole 51e is provided to the substrate 51a at a position on the outer circumferential side than the movable side claw 51b. The engaging hole 51e is a part where an engaging claw 52c of a retaining plate 52 is to be inserted.

Also in the present embodiment, a coil spring 26 is arranged in a space partitioned by the cap-side attachment portion 25 and the movable side claw 51b. The overall length of the coil spring 26 is determined to be equal to or longer than the distance between the ceiling 21 and the substrate 51a in a state where the hook portion 25a and the hook portion 51c are hooked. Thus, when the cap member 6 is removed from the housing 5, the coil spring 26 is extended to separate the movable member 51 until the hook portion 25a and the hook portion 51c are hooked.

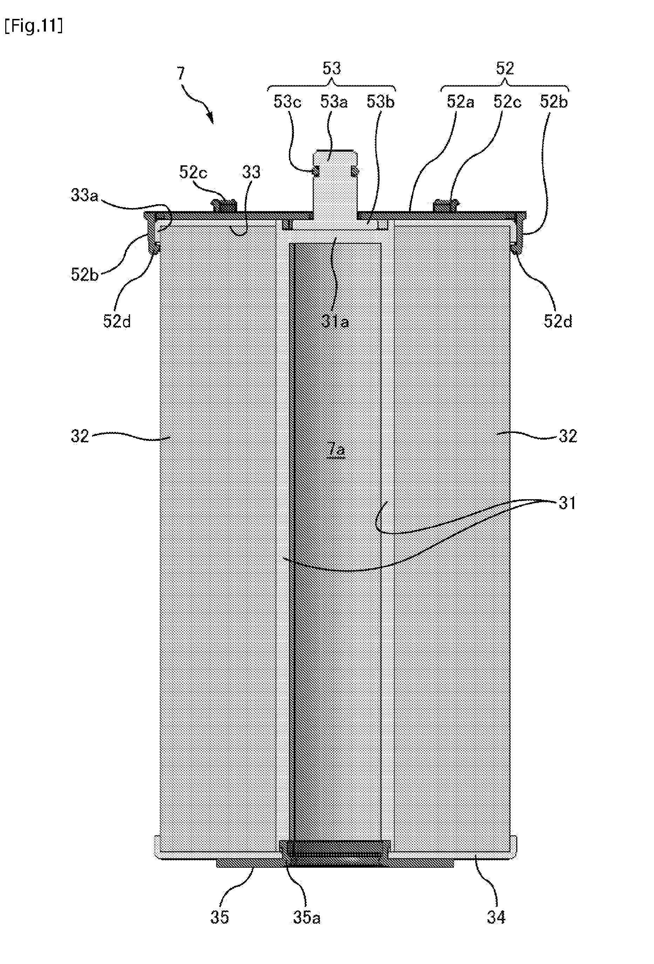

As shown in Figure 11, the filter element 7 of the present embodiment includes the retaining plate 52 and the stopper member 53 at the upper end portion, in addition to the parts described in the embodiment described above.

The retaining plate 52 is a member that is attached so as to cover the upper end plate 33 on the outside, and holds the stopper member 53 and engages the upper end portion of the filter element 7 with the cap member 6. As will be described later, in the present embodiment, the upper end portion of the filter element 7 is engaged with the cap member 6 by the engaging claw 52c (the engaging portion) being engaged with the movable member 51. That is, the present embodiment is structured to have the engaging portion at the upper end portion of the filter element 7.

The retaining plate 52 includes a substrate 52a, an attaching claw 52b and the engaging claw 52c. The substrate 52a is a plate member to which the attaching claw 52b and the engaging claw 52c are provided, and is formed by a circular plate which is approximately the same size as the upper end plate 33. An insertion opening 52e into which the columnar portion 53a of the stopper member 53 is to be inserted is provided at the center of the substrate 52a. This insertion opening 52e has a circular shape. The diameter of the insertion opening 52e is determined to be slightly larger than that of the columnar portion 53a and sufficiently smaller than that of a flange 53b of the stopper member 53.

The attaching claw 52b is a part for attaching the retaining plate 52 to the upper end plate 33, and a plurality of attaching claws 52b are vertically arranged at a regular interval, toward the side of the upper end plate 33 from the side edge of the substrate 52a. A hook portion 52d is arranged in a protruding manner from the tip of the attaching claw 52b toward the inner circumferential side. The retaining plate 52 is attached to the upper end plate 33 by hooking the hook portion 52d to the outer circumferential portion 33a of the upper end plate 33.

The engaging claw 52c is a part for engaging the filter element 7 to the movable member 51 of the cap member 6. That is, the engaging claw 52c corresponds to the engaging portion for engaging the upper end portion of the filter element 7 to the cap member 6 (the movable member 51). The engaging claw 52c of the present embodiment is arranged protruding in the opposite direction from the attaching claw 52b, at a position slightly on the inner circumferential side than the outer circumferential edge of the substrate 52a. The engaging claw 52c is a part that is to be inserted into the engaging hole 51e of the substrate 51a, and a plurality of engaging claws 52c are provided in the same manner as the engaging holes 51e. The filter element 7 is engaged with the movable member 51 by a hook portion provided at the tip of the engaging claw 52c engaging with the upper face of the substrate 51a. That is, the filter element 7 is engaged with the cap member 6.

As described above, the stopper member 53 is a member that seals the communication portion SP or communicates the communication portion SP according to the attaching/detaching of the cap member 6. The stopper member 53 of the present embodiment includes the columnar portion 53a and the flange 53b.

The columnar portion 53a is a part that fits into the cylindrical communication portion SP, and includes an O-ring 53c along the height direction. The O-ring 53c intimately contacts the inner wall of the communication portion SP and the circumferential face of the columnar portion 53a in a state where the columnar portion 53a is inserted in the communication portion SP, and hermetically seals the communication portion SP.

The flange 53b is integrally formed at the lower end of the columnar portion 53a. The flange 53b is formed by a circular plate with a diameter larger than that of the columnar portion 53a and that of the insertion opening 52e provided to the substrate 52b. Also, in a state where the retaining plate 52 is attached, the flange 53b is contained in a gap formed between a ceiling 31a covering the upper end of a core material 31 and the substrate 52a. Furthermore, the columnar portion 53a is provided protruding higher than the retaining plate 52. In this state, the stopper member 53 is attached being movable within the range of a clearance determined by the size of the gap or the diameter of the insertion opening 52e.

With the oil filter 1 structure in the above manner, when the filter element 7 is contained in the containing space and the cap member 6 is attached to the housing 5 in a liquid-tight manner, the columnar portion 53a of the stopper member 53 is fitted into the communication portion SP and hermetically seals the communication portion SP. That is, the space within the communication portion SP is divided by the O-ring 53c. The movable member 51 moves in this sealed state toward the side of the ceiling 21 until the hook portion 51c is positioned near the ceiling 21. The coil spring 26 contracts according to the movement of the movable member 51, and the movable member 51 is pressed toward the side of the housing 5 by a reaction force. Then, the filter element 7 is also pressed toward the side of the housing 5, and the gasket 35 and the upper end face of the partition wall 14 are sealed together in a liquid-tight manner. Also, a sealed state is formed between the core material 31 and the communication portion 11.

When the cap member 6 is rotated in the removal direction at the time of removing the filter element 7, the cap member 6 moves in the direction of separating from the housing 5. The coil spring 26 extends at this time, and the movable member 51 maintains the state of being pressed toward the housing 5 by the reaction force. The communication portion SP thereby moves in the direction of coming out from the columnar portion 53a.

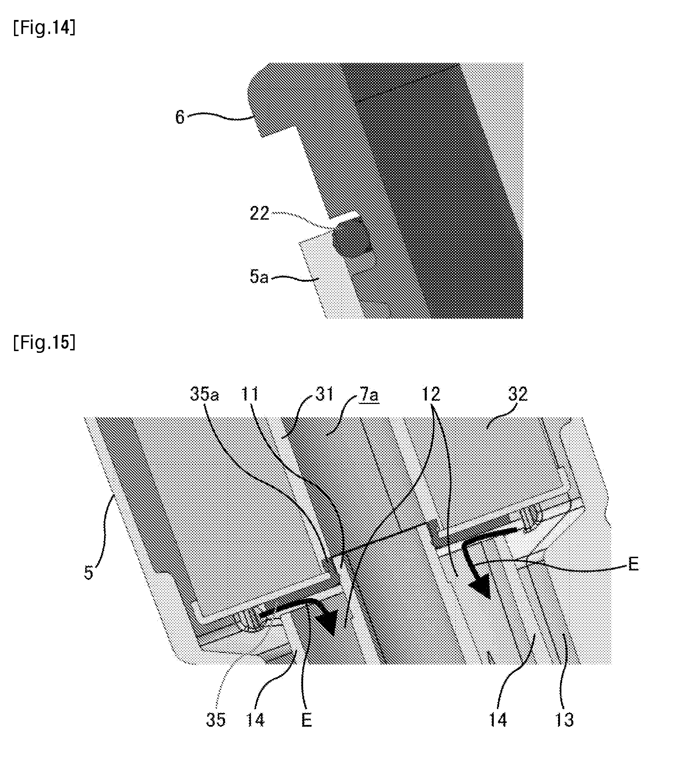

As shown in Figure 13, when the cap member 6 is moved until the O-ring 53c is removed from the communication portion SP, the sealed state by the O-ring 53c is released and the communication portion SP will be in a communicating state. At this time, as shown in Figure 14, an O-ring 22 seals an upper portion 5a of the housing and the cap member 6 in a liquid-tight manner. Accordingly, the air outside the cap member 6 flows into the containing space through the communication portion SP, as shown in Figure 13 by an arrow with a reference sign D. Also, as shown in Figure 15, since the gasket 35 is separated from the upper face of the partition wall 14 according to the movement of the cap member 6, yet to be filtered oil flows into the drain channel portion 12 through the gap between the gasket 35 and the partition wall 14, as shown by an arrow with a reference sign E. Then, the oil which has flowed into the drain channel portion 12 is collected in an oil pan.

As described, in the present embodiment, the sealed state of the communication portion SP by the stopper member 53 is released according to the movement of the cap member 6 in the removal direction and the outside air is lead into the containing space from the ceiling 21 of the cap member 6, and thus, the defect of the oil in the containing space leaking from the connected part of the cap member 6 and the housing 5 can be suppressed. Also, since the communication portion SP is sealed or communicated by the stopper member 53 provided at the upper face of the filter element 7, the sealed state of the communication portion SP can be controlled by a simple structure.

Next, a fourth embodiment of the present invention will be described.

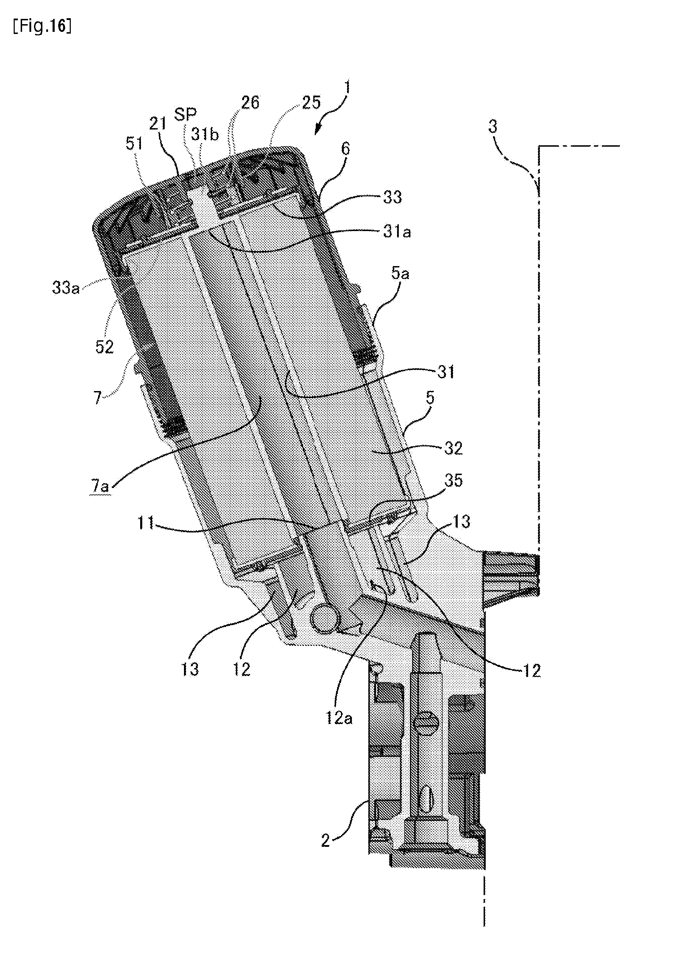

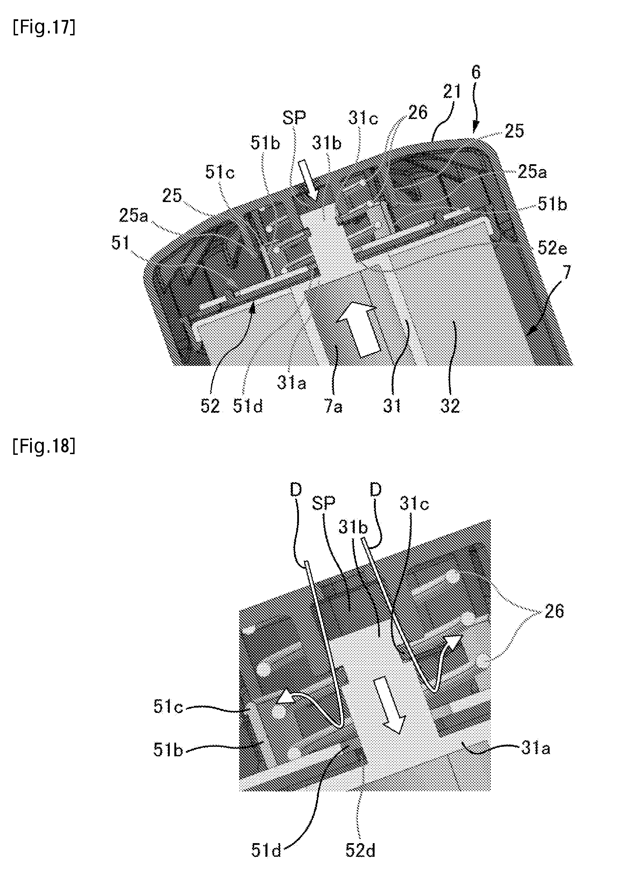

Figures 16 and 17 are views for describing an oil filter 1 of the fourth embodiment. This oil filter 1 has, instead of the stopper member 53 of the oil filter 1 of the third embodiment, a columnar portion 31b provided at the upper face of a ceiling 31a of a core material 31 in a protruding manner. That is, the core material 31 is used as the stopper member.

The columnar portion 31b is structured in the same manner as the columnar portion 53a of the stopper member 53a of the third embodiment, and includes an O-ring 31c along the height direction. Then, when a filter element 7 is contained in a containing space and a cap member 6 is attached to a housing 5 in a liquid-tight manner, the columnar portion 31b is fitted into a communication portion SP and hermetically seals the communication portion SP.

A movable member 51 moves toward the side of a ceiling 21 in this sealed state and a coil spring 26 contracts, thereby pressing the filter element 7 toward the side of the housing 5. Then, a gasket 35 and the upper end face of a partition wall 14 are sealed in a liquid-tight manner.

When the cap member 6 moves in the direction of separating from the housing 5 at the time of removal of the filter element 7, the movable member 51 maintains the state of being pressed toward the housing 5 by a reaction force of the coil spring 26. The communication portion SP thereby moves in the direction of coming out from the columnar portion 31b. When the cap member 6 is moved until an O-ring 31c is removed from the communication portion SP, as shown in Figure 18, the sealed state by the O-ring 31c is released and the communication portion SP will be in a communicating state. Then, the air outside the cap member 6 flows into the containing space through the communication portion SP as shown by an arrow with a reference sign D.

The gasket 35 is thereby separated from the upper face of the partition wall 14, and yet to be filtered oil flows into a drain channel portion 12 through the gap between the gasket 35 and the partition wall 14, as shown by an arrow with a reference sign E. Then, the oil which has flowed into the drain channel portion 12 is collected in an oil pan.

In addition to the effect of the third embodiment, according to the present embodiment, since the columnar portion 31b is integrally provided to the upper face of the ceiling 31a of the core material 31, the structure can be simplified and the burden of assembling can be reduced.

Heretofore, the embodiments of the present invention have been described. However, these embodiments are for enabling easy understanding of the present invention, and are not meant to limit the interpretation of the present invention. The present invention may be changed and modified within the spirit of the invention, and its equivalents are also included.

For example, regarding the depth of the housing 5, each of the embodiments described above is structured such that the lower half portion of the filter element 7 is contained, but the structure is not limited to such. For example, about 1/3 from the bottom side of the filter element 7 may be contained, or about 2/3 from the bottom side may be contained. In short, it is enough if at least the bottom portion of the filter element 7 is contained.

Regarding the pressing portion (the movable member 24, the coil spring 26), this pressing portion may be omitted if the degree of intimacy of contact between the gasket 35 and the partition wall 14 can be adjusted by adjusting the degree of screwing of the cap member 6.

Regarding fixation of the housing 5 and the cap member 6, fixation is achieved in each of the embodiments described above by a male screw and a female screw, but the structure is not limited to such. For example, the housing 5 and the cap member 6 may be fixed using a metal band.

In each of the embodiments described above, the gasket 35 is formed into a shape that covers most part of the lower end plate 34, but it is enough if it is provided at at least a part abutted by the upper end of the partition wall 14. Accordingly, the gasket 35 may also be formed into a ring shape. Additionally, in the case the gasket 35 is formed into a ring shape in the first embodiment, an O-ring may be provided on the upper end of the outer circumferential surface of the communication portion 11.

Regarding the engaging portion 23, each of the embodiments described above is structured such that the side edge of the upper end plate 33 of the filter element 7 is engaged by the engaging claw 28, but the structure is not limited to such. Any structure may be adopted as long as the upper portion of the filter element 7 may be fixed.

Regarding the coil spring 26, springs having other structures may also be used as long as the filter element 7 can be pressed toward the housing 5.

The columnar portions 31b and 53a are structured to include the O-rings 31c and 53c, but protrusions around the outer circumferential surfaces of the columnar portions 31b and 53a may be formed instead of the O-rings 31c and 53c.

Regarding the application target of the oil filter 1, each embodiment has shown as an example that removes contamination from lubricating oil or the like used in an engine, but application to other types of oil filters is also possible.

### [Reference Signs List]

1 Oil filter
2 Casing
3 Engine block
4 Oil cooler
5 Housing
5a Upper portion of housing
6 Cap member
7 Filter element
7a Inner circumferential side space
11 Communication portion
12 Drain channel portion
12a Outlet
13 Inflow side channel portion
13a Inlet
14 Partition wall
21 Ceiling
22 O-ring
23 Engaging portion
24 Movable member
25 Cap-side attachment portion
25a Hook portion
26 Coil spring
27 Substrate
28 Engaging claw
28a Hook portion
29 Movable side claw
29a Hook portion
31 Core material
31a Ceiling
31b Columnar portion
31c O-ring
32 Filtering member
33 Upper end plate
33a Outer circumferential portion
34 Lower end plate
35 Gasket
35a Opening
41 Hollow connection portion
42 O-ring
51 Movable member
51a Substrate
51b Movable side claw
51c Hook portion
51d Insertion opening
51e Engaging hole
52 Retaining plate
52a Substrate
52b Attaching claw
52c Engaging claw
52d Hook portion
52e Insertion opening
53 Stopper member
53a Columnar portion
53b Flange
53c O-ring
DR Drain passage
SP Communication portion

## Claims

1. An oil filter comprising
a cylindrical filter element,
a housing in which at least a bottom portion of the filter element is contained, and
a cap member attached to the housing in a liquid-tight manner and forming with the housing a space for containing the filter element,
for providing yet to be filtered oil from an outer circumferential side of the filter element to deliver to an outside filtered oil that has reached an inner circumferential space of the filter element,
wherein:
an engaging portion is provided to engage the filter element with the cap member,
the housing includes a tubular communication portion connected to the inner circumferential space of the filter element from a bottom side thereof, a drain channel provided annularly to encircle the tubular communication portion, and an inflow channel partitioned from the drain channel by a partition wall and annularly provided to encircle the drain channel,
the filter element includes at the bottom portion thereof a gasket abutting the partition wall while the cap member is attached to the housing in a liquid-tight manner and suppressing a flow of the yet to be filtered oil into the drain channel, and
when the cap member is removed from the housing, the filter element and the cap member are moved together due to the engaging portion so that the yet to be filtered oil flows into the drain channel through a gap between the gasket and the partition wall created by the move.

2. The oil filter according to claim 1, wherein
the cap member includes a pressing portion that presses the filter element toward the partition wall, in a state attached to the housing.

3. The oil filter according to any one of claims 1 and 2, wherein
the communication portion is provided to have a length such that a tip thereof protrudes from an end face of the partition wall, and connected to the inner circumferential space of the filter element in a liquid-tight manner when a gap is created between the gasket and the partition wall.

4. The oil filter according to claim 3, wherein
the gasket is an elastomeric layer being connected to the bottom portion of the filter element and including an opening whose outer circumferential edge is bent along an inner circumferential face of a cylindrical core partitioning the inner circumferential space, and seals by intimately contacting an outer circumferential surface of the tubular communication portion when a gap is created between the partition wall.

5. The oil filter according to any one of claims 1 through 4, wherein
the filter element includes an upper end plate at an upper end thereof and
the engaging portion has an engaging claw to engage with a side edge of the upper end plate and is provided to the cap member.

6. The oil filter according to any one of claims 1 through 5, wherein
a communication portion is provided to a ceiling of the cap member to communicate an inside of the cap member with an outside thereof, and
a stopper member, that hermetically seals the communication portion while the cap member is attached to the housing in a liquid-tight manner and communicates the communication portion when the cap member is removed from the housing, is provided to the upper end of the filter element.

7. The oil filter according to claim 6, wherein
the stopper member includes a columnar portion that fits into the communication portion and has a flange formed thereto, and
the stopper member is provided to an upper end portion of the filter element in a state in which a retaining plate provided with a penetration hole with a diameter larger than that of the columnar portion and smaller than that of the flange covers the flange and the columnar portion protrudes from the penetration hole.

8. A cylindrical oil filter element for filtering yet to be filtered oil provided from an outer circumferential side and discharging from an inner circumferential space thereafter, the filter element being used for an oil filter including a housing and a cap member attached to the housing in a liquid-tight manner and contained in a space formed by the housing and the cap member, the filter element comprising:
an upper end portion being engaged with the cap member by an engaging portion and
a bottom portion at which a gasket is formed, the gasket abutting a partition wall partitioning an annular drain channel provided to the housing and an annular inflow channel encircling the drain channel and suppressing yet to be filtered oil flowing into the drain channel through the inflow channel while the cap member is attached to the housing in a liquid-tight manner,
wherein
when the cap member is removed from the housing, the filter element is moved together with the cap member due to the engaging portion, and the yet to be filtered oil is made to flow into the drain channel through a gap between the gasket and the partition wall created by the move.

9. The filter element according to claim 8, wherein
a stopper member is provided to the upper end, hermetically seals a communication portion provided to a ceiling of the cap member to communicate an inside of the cap member with an outside thereof while the cap member is attached to the housing in a liquid-tight manner, and communicates the communication portion when the cap member is removed from the housing.
